# EUROPÄISCHE PATENTANMELDUNG

(11) **EP 1 544 506 A2**
(43) Veröffentlichungstag der Anmeldung: **22.06.2005**
(21) Anmeldenummer: 04028799.7
(22) Anmeldetag: 04.12.2004
(51) Int. Cl.: F16H 3/093

(54) **Automatisches Wechselgetriebe**

(30) Priorität: 18.12.2003 DE 10361333
(71) Anmelder: GETRAG Innovations GmbH, 74199 Untergruppenbach (DE)
(72) Erfinder: Müller, Andreas, 71696 Möglingen (DE)
(74) Vertreter: Steil, Christian, Dipl.-Ing.

(57) **Zusammenfassung**

Es wird vorgeschlagen ein zentral synchronisiertes automatisches Wechselgetriebe (10) zum Einrichten einer Mehrzahl von Gangstufen (1-7,R), insbesondere für Kraftfahrzeuge, mit einer Eingangswelle (20), einem Haupt-Getriebezweig und einem hierzu parallelen Hilfs-Getriebezweig (26), und einer Ausgangswelle (22), wobei der Haupt-Getriebezweig (24) eine Mehrzahl von Gangstufen-Radsätzen zur Einrichtung unterschiedlicher Gangstufen aufweist, wobei der Hilfs-Getriebezweig (26) wenigstens einen Synchronisierungs-Radsatz (64, 66) zur zentralen Synchronisierung aufweist, wobei die Radsätze des Haupt-Getriebezweiges (24) und des Hilfs-Getriebezweiges (26) jeweils ein Losrad (50) und ein damit kämmendes Festrad (52) aufweisen und mit der Ausgangswelle (22) verbunden sind, wobei der Haupt-Getriebezweig (24) unmittelbar oder über eine Haupt-Schaltkupplung (44) mit der Eingangswelle (20) verbunden ist und wobei der Hilfs-Getriebezweig (26) über eine Reibkupplung (30) mit der Eingangswelle (20) verbunden ist, die zum zentralen Synchronisieren bei Wechseln von Gangstufen des Haupt-Getriebezweiges eingerichtet ist.

## Beschreibung

Die vorliegende Erfindung betrifft ein zentral synchronisiertes automatisches Wechselgetriebe zum Einrichten einer Mehrzahl von Gangstufen, insbesondere für Kraftfahrzeuge.

Automatische Kraftfahrzeuggetriebe lassen sich im Wesentlichen in folgende Klassen einteilen:
- Klassische Wandlerautomaten mit vorgeschaltetem hydrodynamischem Drehmomentwandler und Planetenradsätzen mit Kupplungen und Bremsen;
- automatisierte Schaltgetriebe auf der Grundlage herkömmlicher Handschaltgetriebe in Vorgelegebauweise;
- Doppelkupplungsgetriebe mit zwei parallelen Getriebezweigen, wobei jedem Getriebezweig eine eigene vorgeschaltete Kupplung zugeordnet ist;
- stufenlose Getriebe wie Umschlingungsgetriebe und Toroidgetriebe; und
- sogenannte zentral synchronisierte Getriebe, die ebenfalls auf klassischen Handschaltgetrieben in Vorgelegebauweise basieren.

Die vorliegende Erfindung gehört zu der letzten Klasse von automatischen Wechselgetrieben für Kraftfahrzeuge. Diese Klasse von Automatikgetrieben basiert auf dem Gedanken, die Kraftübertragung bei eingelegtem Gang generell formschlüssig bzw. reibschlüssig erfolgen zu lassen. Insbesondere soll der Wirkungsgrad nicht durch einen vorgeschalteten hydrodynamischen Wandler negativ beeinflusst werden.

Zum zweiten sollen die Schaltkupplungen zum formschlüssigen Ein- und Auslegen von Gangstufen ohne aufwendige eigene Synchronisierungen auskommen. Zum Synchronisieren des Zielganges bei einem Gangwechsel wird eine zentrale Reibkupplung verwendet.

Beispielhaft sei in diesem Zusammenhang verwiesen auf die DE 197 41 440 Al. Das aus dieser Druckschrift bekannte Wechselgetriebe weist eine erste zwischen Antriebs- und Abtriebswelle angeordnete, Drehmoment übertragende und verschiedene Übersetzungsverhältnisse ermöglichende Einrichtung auf, die in einer Arbeitsweise eine vollständige Kraftflussentkopplung von der Antriebswelle und Abtriebswelle sicherstellt (entsprechend einem Vorgelegegetriebe, erster Zweig). Parallel zu dieser ersten Einrichtung ist eine zweite Einrichtung zur Drehmomentübertragung zwischen Antriebs- und Abtriebswelle vorgesehen, mit der im Gegensatz zur ersten Einrichtung ein stufenlos wählbares Drehmoment im Bereich von null bis zum maximal anliegenden Drehmoment übertragbar ist (zweiter Zweig). Die zwei Zweige werden mittels eines Planetenradsatzes (Summiergetriebe) zusammengeführt.

Das Wechselgetriebe weist jedoch vergleichsweise viele Bauteile und eine relativ geringe Spreizung auf. Zudem ist der Wirkungsgrad verbesserungswürdig.

Vor diesem Hintergrund ist es die Aufgabe der vorliegenden Erfindung, ein verbessertes zentral synchronisiertes automatisches Wechselgetriebe anzugeben.

Diese Aufgabe wird durch ein zentral synchronisiertes automatisches Wechselgetriebe zum Einrichten einer Mehrzahl von Gangstufen, insbesondere für Kraftfahrzeuge, gelöst, mit einer Eingangswelle, einem Hauptgetriebezweig und einem hierzu parallelen Hilfs-Getriebezweig, und einer Ausgangswelle, wobei der Haupt-Getriebezweig eine Mehrzahl von Gangstufen-Radsätzen zur Einrichtung unterschiedlicher Gangstufen aufweist, wobei der Hilfs-Getriebezweig wenigstens einen Synchronisierungs-Radsatz zur zentralen Synchronisierung aufweist, wobei die Radsätze des Haupt-Getriebezweiges und des Hilfs-Getriebezweiges jeweils ein Losrad und ein damit kämmendes Festrad aufweisen und mit der Ausgangswelle verbunden sind, wobei der Haupt-Getriebezweig unmittelbar oder über eine Haupt-Schaltkupplung mit der Eingangswelle verbunden ist und wobei der Hilfs-Getriebezweig über eine Reibkupplung mit der Eingangswelle verbunden ist, die zum zentralen Synchronisieren bei Wechseln von Gangstufen des Haupt-Getriebezweiges eingerichtet ist.

Das erfindungsgemäße Wechselgetriebe kommt mit wenigen Komponenten aus. Eine dem Wechselgetriebe vorgeschaltete Anfahr- und Trennkupplung ist nicht erforderlich, kann jedoch vorgesehen sein, um den Getriebeaufbau zu vereinfachen. Ein spezielles Summiergetriebe (z.B. in Form eines Planetenradsatzes) zum Summieren der Leistungsflüsse aus dem Haupt- und dem Hilfs-Getriebezweig ist nicht erforderlich, da die Getriebezweige jeweils unmittelbar mit der Ausgangswelle verbunden sind.

Die obige Aufgabe wird demzufolge vollkommen gelöst.

Von besonderem Vorteil ist es, wenn der Haupt-Getriebezweig und der Hilfs-Getriebezweig jeweils eine Vorgelegewelle aufweisen, die parallel zu der Ausgangswelle angeordnet sind.

Durch diese Maßnahme kann das erfindungsgemäße Wechselgetriebe vom Aufbau her weitgehend an herkömmliche Vorgelegegetriebe angepasst werden. Die hierbei üblichen Komponenten wie Wellen, Los- und Festräder lassen sich bei dem erfindungsgemäßen Wechselgetriebe in entsprechender Weise verwenden.

Gemäß einer weiteren bevorzugten Ausführungsform weist ein Synchronisierung-Radsatz des Hilfs-Getriebezweiges eine kleinere Übersetzung auf als Radsätze des Haupt-Getriebezweiges.

Hierdurch wird erreicht, dass die Reibkupplung zur Synchronisierung aller Zielgänge verwendet werden kann, die den genannten Radsätzen des Haupt-Getriebezweiges zugeordnet sind. Von besonderem Vorzug ist es dabei, wenn die Übersetzung des Synchronisierungs-Radsatzes kleiner ist als jene von sämtlichen (Vorwärtsgang-)Radsätzen des Haupt-Getriebezweiges.

Ferner ist es vorteilhaft, wenn ein Radsatz des Hilfs-Getriebezweiges eine Übersetzung kleiner als 1 (Overdrive) aufweist.

Hierdurch lässt sich eine besonders hohe Spreizung erzielen.

Gemäß einer weiteren alternativen Ausführungsform weist der Hilfs-Getriebezweig wenigstens einen weiteren Synchronisierungs-Radsatz mit einer anderen Übersetzung auf, wobei die zwei Synchronisierungs-Radsätze bei Gangstufenwechseln des Haupt-Getriebezweiges zur zentralen Synchronisierung verwendbar sind.

Durch das Bereitstellen von zwei Synchronisierungs-Radsätzen mit unterschiedlichen Übersetzungen kann der Vorgang der zentralen Synchronisierung an den jeweiligen Gangstufenwechsel angepasst werden.

Ferner ist es vorteilhaft, wenn ein Synchronisierungs-Radsatz als Gangstufen-Radsatz zur Einrichtung einer Gangstufe des Wechselgetriebes ausgebildet ist.

Hierdurch erhält der Synchronisierungs-Radsatz eine Doppelfunktion. Bei der Verwendung des Radsatzes als Gangstufen-Radsatz kann es notwendig sein, die Reibkupplung im Reibschluss zu betreiben.

Vorteilhaft ist es auch, wenn die Eingangswelle und die Ausgangswelle koaxial zueinander ausgerichtet sind.

Zum einen ermöglicht dies auf einfache Weise, das Getriebe längs im Fahrzeug einzubauen, insbesondere für Fahrzeuge mit Heck- oder Allradantrieb.

Dabei ist es auch vorteilhaft, wenn eine direkte Gangstufe (mit einer Übersetzung von eins) durch eine Direkt-Schaltkupplung einrichtbar ist, die die Eingangswelle und die Ausgangswelle miteinander verbinden kann.

Hierdurch kann die Anzahl von Gangstufen des Wechselgetriebes mit vergleichsweise einfachen Mitteln erhöht werden.

Von besonderem Vorzug ist es auch, wenn die Haupt-Schaltkupplung und die Direkt-Schaltkupplung als erstes Schaltkupplungspaket ausgebildet sind, das die Eingangswelle mit der Ausgangswelle oder mit einem Radsatz verbinden kann, der die Eingangswelle mit einer Vorgelegewelle des Haupt-Getriebezweiges verbindet.

Hierdurch lässt sich die Teileanzahl verringern, da die Hauptund die Direkt-Schaltkupplung in ein Schaltkupplungspaket integriert werden können.

Ferner ist es vorteilhaft, wenn der Haupt-Getriebezweig und der Hilfs-Getriebezweig in einem Getriebegehäuse aufgenommen sind und wenn die Reibkupplung außerhalb des Getriebegehäuses gelagert ist.

Bei dieser Maßnahme können der Haupt- und der Hilfs-Getriebezweig nach der Art eines herkömmlichen Handschalt-Vorgelegegetriebes realisiert werden. Die Reibkupplung außerhalb des Getriebegehäuses kann als Trocken- oder als Nasskupplung realisiert sein. Vorzugsweise wird die Reibkupplung jedoch als nasse Lamellenkupplung realisiert. Durch die Anordnung der Reibkupplung außerhalb des Getriebegehäuses vereinfacht sich ferner die Montage des gesamten Antriebsstranges.

Alternativ hierzu kann die Reibkupplung innerhalb des Gehäuses oder von den übrigen Komponenten des Wechselgetriebes durch ein Lagerschild oder Ähnliches getrennt sein, das innerhalb eines Gesamtgehäuses angeordnet ist.

Bei der Anordnung außerhalb des Getriebegehäuses ist es ferner vorteilhaft, wenn der Hilfs-Getriebezweig mit der Reibkupplung über eine Hohlwelle verbunden ist, die die Eingangswelle umgibt.

Hierdurch ergibt sich eine radial kompakte Bauweise. Zudem lässt sich hierbei die Eingangswelle auf einfache Weise mit einem Eingangsglied der Reibkupplung verbinden.

Auch ist es vorteilhaft, wenn ein Ausgangsglied der Reibkupplung bzw. eine damit verbundene Welle über mindestens einen Radsatz mit einer Vorgelegewelle des Hilfs-Getriebezweiges verbunden oder verbindbar ist.

Bei dieser Ausführungsform ist es von besonderem Vorteil, wenn das Ausgangsglied der Reibkupplung bzw. die damit verbundene Welle über zwei Radsätze mit der Vorgelegewelle des Hilfs-Getriebezweiges verbindbar ist, wobei die zwei Radsätze mittels eines dritten Schaltkupplungspaktes wahlweise zum Zwecke der Verbindung verwendbar sind.

Mit anderen Worten ist es bei dieser Ausführungsform möglich, das Ausgangsglied der Reibkupplung über zwei verschiedene Radsätze an die Hilfs-Vorgelegewelle anzubinden. Hierdurch kann in Kombination mit einem oder mehreren Radsätzen, die die Hilfs-Vorgelegewelle an die Ausgangswelle anbinden, eine Vielzahl von Übersetzungsverhältnissen eingerichtet werden. Insbesondere kann so eine vergleichsweise große Spreizung innerhalb des Hilfs-Getriebezweiges erzielt werden.

Insgesamt ist es vorteilhaft, wenn die Reibkupplung als Anfahrkupplung ausgelegt ist und die Eingangswelle unmittelbar mit einem Antriebsmotor verbindbar ist.

Bei dieser Ausführungsform dient die Reibkupplung nicht nur zum zentralen Synchronisieren, sondern auch zum Anfahren.

Es versteht sich in diesem Zusammenhang, dass zum Anfahren insbesondere das Anfahren eines Kraftfahrzeuges verstanden wird, der mit einem Verbrennungsmotor betrieben wird. Denn hierbei ist davon auszugehen, dass die Ausgangswelle des Antriebsmotors generell eine bestimmte Mindestdrehzahl aufweist, die für den Leerlauf des Antriebsmotors notwendig ist.

Bei dieser Ausführungsform ist insbesondere keine separate Anfahr- und Trennkupplung vorgesehen, wie sie bei herkömmlichen Handschaltgetrieben in Form einer Trockenkupplung vorgesehen ist.

Von besonderem Vorteil ist es dabei, wenn die Reibkupplung über eine Anfahr-Schaltkupplung mit dem Haupt-Getriebezweig verbindbar ist, um einen Anfahrvorgang über einen Radsatz des Haupt-Getriebezweiges durchführen zu können.

Bei dieser Ausführungsform ist von Vorteil, dass der für den ersten Gang im Haupt-Getriebezweig vorgesehene Radsatz auch zum Anfahren verwendbar ist. Es ist insbesondere nicht notwendig, in dem Hilfs-Getriebezweig eine Übersetzung einzurichten, die gleich jener des ersten Ganges des Haupt-Getriebezweiges ist.

Bei einer alternativen Ausführungsform ist die Reibkupplung über eine Anfahr-Schaltkupplung mit dem Hilfs-Getriebezweig verbindbar, um einen Anfahrvorgang über einen Radsatz des Hilfs-Getriebezweiges durchführen zu können.

Bei dieser Ausführungsform ist vorteilhaft, dass im Haupt-Getriebezweig eine Schaltkupplung weniger notwendig ist, so dass sich insgesamt eine kürzere axiale Bauweise erzielen lässt.

Ferner ist es gemäß einer weiteren alternativen Ausführungsform vorteilhaft, wenn die Eingangswelle über eine Anfahr- und Trennkupplung mit einem Antriebsmotor verbindbar ist.

Während die zuvor genannten Ausführungsformen generell von einer Anbindung der Eingangswelle unmittelbar an die Abtriebswelle eines Antriebsmotors ausgehen, ist im vorliegenden Fall eine separate Anfahrkupplung vorgesehen. Die Anfahr- und Trennkupplung dient bei dieser Ausführungsform vorzugsweise ausschließlich zum Anfahren. In allen anderen Betriebszuständen bleibt die Anfahr- und Trennkupplung geschlossen. Die Funktionsweise ist dann ähnlich wie bei den Ausführungsformen ohne Anfahr- und Trennkupplung.

Durch die Anfahr- und Trennkupplung ist es insbesondere möglich, auf eine separate Anfahr-Schaltkupplung in dem Wechselgetriebe zu verzichten. Insgesamt ergibt sich demzufolge ein einfacherer Aufbau des Wechselgetriebes.

Gemäß einer weiteren bevorzugten Ausführungsform weist das Wechselgetriebe zwei Vorgelegewellen auf, die parallel zur Eingangswelle ausgerichtet sind, wobei mit den Vorgelegewellen jeweils verbundene Festräder mit einer Abtriebseinheit verbunden sind.

Diese Ausführungsform des erfindungsgemäßen Wechselgetriebes eignet sich insbesondere für den Front-Quereinbau in einem Kraftfahrzeug.

Von besonderem Vorzug ist es dabei, wenn die Abtriebseinheit ein Vorderachsgetriebe aufweist.

Hierbei ergibt sich ein besonders kompakter Aufbau. Das Vorderachsgetriebe kann bspw. auch in das Getriebegehäuse integriert sein. Bspw. können die Abtriebsfesträder der Vorgelegewellen mit einem Zahnrad eines Differenzialkorbes in Eingriff stehen.

Von besonderem Vorzug ist es bei dieser Ausführungsform ferner, wenn die Radsätze des Haupt- und des Hilfs-Getriebezweiges auf die zwei Vorgelegewellen verteilt sind.

Hierdurch ergibt sich ein besonders kompakter Aufbau. Eine den Hilfs-Getriebezweig mit der Reibkupplung verbindende Hohlwelle kann kurz ausgebildet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Getriebeschema einer ersten Ausführungsform des erfindungsgemäßen Wechselgetriebes;
- Fig. 2: ein Getriebeschema einer zweiten Ausführungsform des erfindungsgemäßen Wechselgetriebes;
- Fig. 3: ein Getriebeschema einer dritten Ausführungsform des erfindungsgemäßen Wechselgetriebes; und
- Fig. 4: ein Getriebeschema einer vierten Ausführungsform des erfindungsgemäßen Wechselgetriebes.

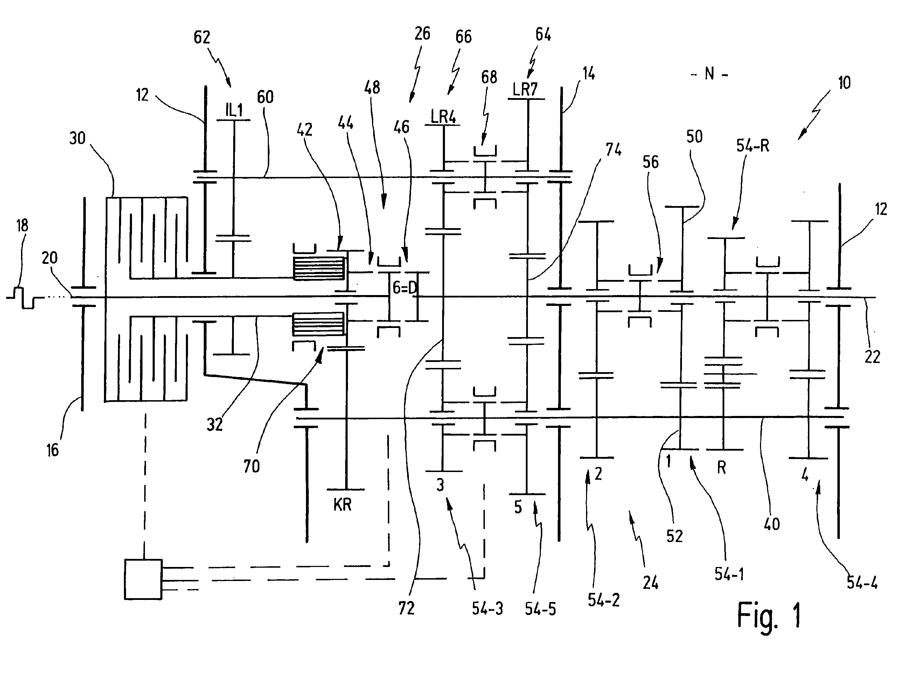

In Fig. 1 ist eine erste Ausführungsform des erfindungsgemäßen Wechselgetriebes generell mit 10 bezeichnet.

Das Wechselgetriebe 10 weist sieben Gangstufen auf, die mit 1 - 7 angegeben sind.

Das Wechselgetriebe 10 weist ferner ein Getriebegehäuse 12 auf, in dem ein Lagerschild 14 axial etwa mittig angeordnet ist. Da das Wechselgetriebe 10 vergleichsweise lange Wellenabschnitte aufweist, dient das Lagerschild 14 zum Abstützten von mittleren Bereichen dieser Wellen.

Ferner ist ein Kupplungsgehäuse 16 vorgesehen.

Ein Antriebsmotor 18 (bspw. ein Verbrennungsmotor eines Kraftfahrzeuges) ist mit einer Eingangswelle 20 des Wechselgetriebes 10 verbunden. Die Eingangswelle 20 tritt in das Kupplungsgehäuse 16 ein und erstreckt sich durch das Kupplungsgehäuse 16 hindurch in das Getriebegehäuse 12 hinein.

Das Wechselgetriebe 10 weist ferner eine Ausgangswelle 22 auf, die koaxial zu der Eingangswelle 20 ausgerichtet ist. Die Ausgangswelle 22 tritt an dem gegenüberliegenden Ende aus dem Getriebegehäuse 12 aus.

Das Wechselgetriebe 10 weist einen Haupt-Getriebezweig 24 und einen hierzu parallelen Hilfs-Getriebezweig 26 auf.

In dem Kupplungsgehäuse 16 ist eine Reibkupplung 30 aufgenommen. Die Reibkupplung 30 ist als nasse Lamellenkupplung ausgebildet und dazu ausgelegt, einen Anfahr-Vorgang durchzuführen. Mit anderen Worten kann das Fahrzeug durch Betätigen der Reibkupplung 30 angefahren werden. Eine separate vorgeschaltete Anfahr- und Trennkupplung in Form einer trockenen Reibkupplung ist nicht vorgesehen.

Die Reibkupplung 30 weist ein Eingangsglied auf, das fest mit der Eingangswelle 20 verbunden ist. Ein Ausgangsglied der Reibkupplung 30 ist mit einer Hohlwelle 32 verbunden. Die Hohlwelle 32 umgibt die Eingangwelle 20 und tritt gemeinsam mit dieser in das Getriebegehäuse 12 ein.

Der Haupt-Getriebezweig 24 weist eine Vorgelegewelle 40 auf. Die Eingangswelle 20 ist über einen Konstanten-Radsatz 42 (KR) mit der Vorgelegewelle 40 verbindbar.

Zu diesem Zweck ist an dem Ende der Eingangswelle 20 eine Haupt-Schaltkupplung 44 vorgesehen. Die Haupt-Schaltkupplung 44 bildet gemeinsam mit einer Direkt-Schaltkupplung 46 ein erstes Schaltkupplungspaket 48.

Die Direkt-Schaltkupplung 46 ist dazu ausgelegt, die Eingangswelle 20 und die Ausgangswelle 22 direkt miteinander zu verbinden.

Durch die Haupt-Schaltkupplung 44 kann die Ausgangswelle 22 von der Eingangswelle 20 entkoppelt werden. Dies ist aus sicherheitstechnischen Gründen vorteilhaft.

Der Haupt-Getriebezweig 24 ist nach der Art eines herkömmlichen Vorgelege-Getriebes ausgebildet. So weist der Haupt-Getriebezweig 24 ein Mehrzahl von Radsätzen auf. Jedem Radsatz ist eine Gangstufe 1-5, R zugeordnet. Jeder Radsatz weist ein Losrad und ein Festrad auf, die ständig in Eingriff stehen. Zum Einrichten der jeweiligen Gangstufen sind Schaltkupplungen vorgesehen, die dazu ausgelegt sind, das jeweilige Losrad mit der Welle zu verbinden, an der das Losrad drehbar gelagert ist.

Aus Gründen einer übersichtlicheren Darstellung ist lediglich für die Gangstufe 1 (d.h. den ersten Gang) das Losrad 50 und das zugeordnete Festrad 52 gezeigt. Das Festrad 52 und das Losrad 50 bilden einen Gangstufen-Radsatz 54-1. Das Losrad 50 ist drehbar an der Ausgangswelle 22 gelagert und mittels einer Gangstufen-Schaltkupplung 56 mit der Ausgangswelle 22 verbindbar. Das Festrad 52 ist mit der Vorgelegewelle 40 fest verbunden.

Der Haupt-Getriebezweig 24 weist ferner einen entsprechenden Radsatz 54-2 für die zweite Gangstufe auf. Die dem Radsatz 54-2 zugeordnete Schaltkupplung ist mit der Schaltkupplung 56 in ein Schaltkupplungspaket integriert. Die Radsatzanordnung für den zweiten und den ersten Gang ist in axialer Richtung hinter dem Lagerschild 14 angeordnet.

Vor dem Lagerschild 14 sind Radsätze 54-3, 54-5 für den dritten und den fünften Gang vorgesehen. Hierbei sind die jeweiligen Losräder an der Vorgelegewelle 40 drehbar gelagert. Entsprechend ist ein Schaltkupplungspaket mit Schaltkupplungen zum Ein- und Auslegen des dritten und fünften Ganges an der Vorgelegewelle 40 gelagert.

In axialer Richtung am hinteren Ende des Wechselgetriebes 10 sind ein Radsatz 54-R für den Rückwärtsgang und ein Radsatz 54-4 für den vierten Gang vorgesehen. Ein Schaltkupplungspaket mit Schaltkupplungen zum Ein- und Auslegen des Rückwärts- bzw. des vierten Ganges ist an der Ausgangswelle gelagert. Entsprechend sind die Losräder der Radsätze 54-R, 54-4 drehbar an der Ausgangswelle 22 gelagert.

In dem Haupt-Getriebezweig 24 ist folglich die Reihenfolge der Radsätze, vom Eingang her gesehen: 3, 5, 2, 1, R, 4.

Der sechste Gang ist, wie gesagt, als Direkt-Gang eingerichtet und mittels der Direkt-Schaltkupplung 46 ein- und auslegbar.

Die Schaltkupplungen zum Ein- und Auslegen der Gangstufen 1-6, R sind als nicht synchronisierte Schaltkupplungen (bspw. in Form von Klauenkupplungen u.ä.) ausgebildet. Zum Synchronisieren des jeweiligen Zielganges bei einem Gangwechsel ist eine zentrale Synchronisierung vorgesehen. Zu diesem Zweck kann die Reibkupplung 30 in Verbindung mit dem Hilfs-Getriebezweig 26 verwendet werden.

Der Hilfs-Getriebezweig 26 weist eine Hilfs-Vorgelegewelle 60 auf. Die Hilfs-Vorgelegewelle 60 und die Vorgelegewelle 40 sind parallel zu der Ausgangswelle 22 angeordnet.

Die Hilfs-Vorgelegewelle 62 ist über einen Konstanten-Radsatz 62 (IL1) mit der Hohlwelle 32 verbunden. Somit ist der Hilfs-Getriebezweig 26 mit dem Ausgangsglied der Reibkupplung 30 verbunden.

Der Hilfs-Getriebezweig 26 weist einen ersten Synchronisierungs-Radsatz 64 (LR7) und einen zweiten Synchronisierungs-Radsatz 66 (LR4) auf. Die Synchronisierungs-Radsätze 64, 66 weisen jeweils ein Losrad auf, das an der Hilfs-Vorgelegewelle 60 drehbar gelagert ist. Ein zweites Schaltkupplungspaket 68 mit zwei nicht näher bezeichneten Schaltkupplungen dient dazu, den ersten oder den zweiten Synchronisierungs-Radsatz 64, 66 zu schalten.

Das Losrad des zweiten Synchronisierungs-Radsatzes 66 kämmt mit einem Festrad 72, das unmittelbar hinter der Direkt-Schaltkupplung 46 an der Ausgangswelle 22 festgelegt ist. Das Festrad 72 ist gleichfalls Teil des Radsatzes 54-3 für den dritten Gang. In entsprechender Weise kämmt das Losrad des ersten Synchronisierungs-Radsatzes 64 mit einem weiteren Festrad 74, das Teil des Radsatzes 54-5 für den fünften Gang bildet.

Die Festräder 72, 74 realisieren folglich eine Doppelnutzung und werden als erstes Doppelnutzungsfestrad 72 und zweites Doppelnutzungsfestrad 74 bezeichnet.

Die Synchronisierungs-Radsätze 64, 66 sind in axialer Richtung vor dem Lagerschild 14 angeordnet. Die Hilfs-Vorgelegewelle 60 erstreckt sich lediglich bis zu dem Lagerschild 14. Die Vorgelegewelle 40 des Haupt-Getriebezweiges 24 erstreckt sich hingegen über die gesamte Länge des Wechselgetriebes 10 durch das Lagerschild 14 hindurch.

Das Wechselgetriebe 10 weist ferner eine Anfahr-Schaltkupplung 70 auf. Die Anfahr-Schaltkupplung 70 ist dazu ausgelegt, die Hohlwelle 32 mit dem Konstanten-Radsatz 42 (KR) zu verbinden. Die Anfahr-Schaltkupplung 70 ist ebenfalls als nicht-synchronisierte Schaltkupplung ausgelegt. Die Anfahr-Schaltkupplung 70 und die Haupt-Schaltkupplung 44 sind auf gegenüberliegenden Seiten des Konstanten-Radsatzes 42 angeordnet.

Die Funktionsweise des Wechselgetriebes 10 wird nachfolgend anhand verschiedener ausgewählter Betriebszustände erläutert.

In einer Neutralstellung (die in Figur 1 gezeigt ist), was durch ein "N" angegeben ist, ist in der Regel lediglich die Anfahr-Schaltkupplung 70 eingelegt. Der Haupt-Getriebezweig 24 ist folglich von dem Antriebsmotor 18 entkoppelt. Die Reibkupplung 30 ist geöffnet und folglich ist auch der Hilfs-Getriebezweig 26 von dem Antriebsmotor 18 entkoppelt.

In der Fahrstufe "D" wird zusätzlich die Schaltkupplung 56 für die erste Gangstufe 1 eingelegt. Zum Anfahren wird die Reibkupplung 30 allmählich geschlossen. Hierbei fließt Leistung über die Reibkupplung 30, die Hohlwelle 32, die Anfahr-Schaltkupplung 70, den Konstanten-Radsatz 42, die Vorgelegewelle 40 und den Radsatz 54-1 für die erste Gangstufe hin zu der Ausgangswelle 22. Sobald die Reibkupplung 30 vollständig geschlossen ist, kann die Haupt-Schaltkupplung 44 geschlossen werden. Anschließend werden die Anfahr-Schaltkupplung 70 und die Reibkupplung 30 wieder geöffnet. Anschließend wird zur Vorbereitung von weiteren Gangstufenwechseln die Schaltkupplung für den zweiten Synchronisierungs-Radsatz 66 geschlossen.

Beim Hochschalten in die zweite Gangstufe wird die Reibkupplung 30 erneut betätigt. Dabei wird diese schlupfend betätigt, so dass auf die Ausgangswelle 22 zum einen Leistung über den Haupt-Getriebezweig 24 und zum Anderen über den Hilfs-Getriebezweig 26 geführt wird. Hierdurch kann an dem Hilfs-Getriebezweig 46 das eingangsseitig anstehende Drehmoment übernommen werden. Hierdurch kann die Schaltkupplung für den Radsatz 54-1 geöffnet werden. Anschließend kann durch geeignetes Betätigen der Reibkupplung 30 eine Synchronisation an dem Radsatz 54-2 erfolgen, so dass die Schaltkupplung für die zweite Gangstufe 2 zentral synchronisiert geschlossen werden kann. Anschließend wird die Reibkupplung 30 wieder geöffnet und der Leistungsfluss auf die Ausgangswelle 22 erfolgt wiederum allein über den Haupt-Getriebezweig 24.

Die Gangstufenwechsel in den dritten und in den vierten Gang verlaufen in entsprechender Weise, wobei jeweils der zweite Synchronisierungs-Radsatz 66 zur Drehmomentübernahme und Synchronisierung eingesetzt wird.

Bei eingelegter vierter Gangstufe (Leistungsfluss ausschließlich über den Haupt-Getriebezweig 24) wird das Schaltkupplungspaket 68 umgeschaltet und die Schaltkupplung für den ersten Synchronisierungs-Radsatz 64 geschlossen.

Beim Gangwechsel von der vierten in die fünfte Gangstufe erfolgen die Drehmomentübernahme und die Synchronisierung demzufolge über den ersten Synchronisierungs-Radsatz 64. Die generelle Funktionsweise ist jedoch die gleiche wie bei Gangwechseln zwischen den Gangstufen 1-4.

Bei Gangstufenwechseln in den fünften und in den sechsten Gang wird das gleiche, oben beschriebene Schema verwendet, um das getriebeeingangsseitige Drehmoment über die Reibkupplung 30 zu übernehmen und die Zielgangstufe zu synchronisieren.

Eine Besonderheit erfolgt bei der siebten Gangstufe. Hierbei wird nämlich das Drehmoment über den Hilfs-Getriebezweig 26 vollständig übernommen und nach dem Öffnen der Direkt-Schaltkupplung 46 (= Auslegen der sechsten Gangstufe) wird die Reibkupplung 30 vollständig geschlossen. Der Leistungsfluss auf die Ausgangswelle 22 erfolgt nunmehr ausschließlich über den Hilfs-Getriebezweig, d.h. über die im Reibschluss arbeitende Reibkupplung 30, die Hohlwelle 32, den Konstanten-Radsatz 62, die Hilfs-Vorgelegewelle 60 und den ersten Synchronisierung-Radsatz 64. Der erste Synchronisierungs-Radsatz 64 ist demzufolge gleichzeitig als Gangstufen-Radsatz für die siebte Gangstufe ausgebildet.

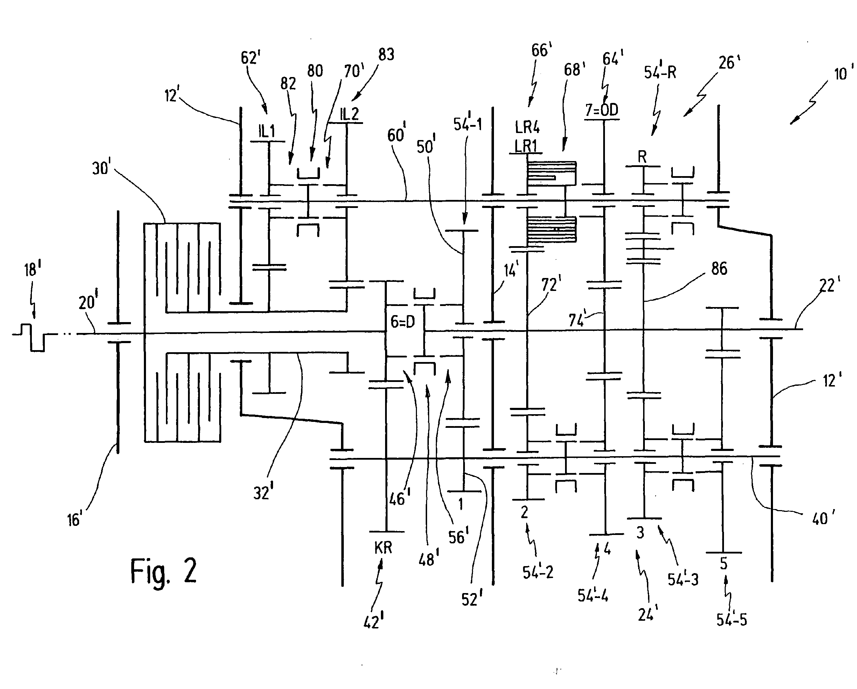

In Figur 2 ist eine zweite Ausführungsform des erfindungsgemäßen Wechselgetriebes generell mit 10' bezeichnet.

Das Wechselgetriebe 10' hat generell einen vergleichbaren Aufbau und eine vergleichbare Funktionsweise wie das Wechselgetriebe 10 in der Figur 1. Im Folgenden wird daher lediglich auf Unterschiede zwischen diesen Wechselgetrieben eingegangen. Sofern nichts anderes ausgeführt ist, soll die obige Beschreibung des Wechselgetriebes 10 gleichfalls für das Wechselgetriebe 10' gelten.

Demzufolge sind Elemente mit gleicher oder entsprechender Anordnung und Funktion in Figur 2 mit den entsprechenden Bezugsziffern des Wechselgetriebes 10 versehen, jeweils mit nachgestelltem Hochstrich.

Bei dem Wechselgetriebe 10' ist benachbart zu dem Konstanten-Radsatz 62' ein drittes Schaltkupplungspaket 80 vorgesehen. Eine Hilfs-Schaltkupplung 82 des Schaltkupplungspaketes des dritten Schaltkupplungspaketes 80 dient dazu, den Konstanten-Radsatz 62' mit der Vorgelegewelle 60' zu verbinden bzw. hiervon zu trennen. Parallel zu dem Konstanten-Radsatz 62' ist ein weiterer Radsatz vorgesehen, der im Folgenden als Anfahr-Radsatz 83 bezeichnet wird. Entsprechend wird eine Schaltkupplung des dritten Schaltkupplungspaketes 80 für den Anfahr-Radsatz 83 als Anfahr-Schaltkupplung 70' bezeichnet.

Im Unterschied zu dem Wechselgetriebe 10 der Figur 1 ist keine Schaltkupplung vorgesehen, die den Konstanten-Radsatz 42' mit der Hohlwelle 32' verbinden könnte. Wie nachfolgend noch erläutert werden wird, erfolgt bei dem Wechselgetriebe 10' ein Anfahrvorgang demzufolge ausschließlich über den Hilfs-Getriebezweig 26'.

Ferner erstreckt sich die Hilfs-Vorgelegewelle 60' durch das Lagerschild 14' hindurch über die gesamte Länge des Wechselgetriebes 10'. Der erste Synchronisierungs-Radsatz 64 und der zweite Synchronisierungs-Radsatz 66 sind in axialer Richtung hinter dem Lagerschild 14' angeordnet. Hinter den Synchronisierungs-Radsätzen 64, 66 sind an der Hilfs-Vorgelegewelle 60' ein Losrad des Radsatzes 54-R für den Rückwärtsgang sowie eine zugeordnete Schaltkupplung angeordnet. Der Radsatz 54'-R weist ein Festrad 86 auf, das mit der Ausgangswelle 22' verbunden ist. Das Festrad 8 ist ein drittes Doppelnutzungsfestrad, das auch Teil des Radsatzes 54'-3 für die dritte Gangstufe ist.

In dem Haupt-Getriebezweig 24' ist das erste Schaltkupplungspaket 48 in folgender Weise abgewandelt. Das erste Schaltkupplungspaket 48 weist eine Direkt-Schaltkupplung 46' zum Verbinden von Eingangswelle 20' und Ausgangswelle 22' sowie eine Schaltkupplung 56' für die erste Gangstufe eins auf. Der Radsatz 54'-1 der ersten Gangstufe ist in axialer Richtung vor dem Lagerschild 14' angeordnet.

Hinter dem Lagerschild 14' sind in dieser Reihenfolge die Radsätze 54'-2, 54'-4 sowie 54'-3 und 54'-5 für die Gangstufen zwei und vier bzw. drei und fünf angeordnet. Die Losräder dieser Radsätze sind sämtlich an der Vorgelegewelle 40' angeordnet. Zwei Schaltkupplungspakete dienen zum Ein- und Auslegen der Gangstufen zwei und vier bzw. drei und fünf.

Das erste Doppelnutzungsfestrad 72' ist Teil des zweiten Synchronisierungs-Radsatzes 66 und des Radsatzes 54'-2 der zweiten Gangstufe. Das zweite Doppelnutzungsfestrad 74' ist Teil des ersten Synchronisierungsradsatzes 64' und des Radsatzes 54'-4 der vierten Gangstufe.

Bei dem Wechselgetriebe 10' können folglich drei Festräder als Doppelnutzungsfesträder 72', 74', 86 ausgebildet werden.

Bei dem Wechselgetriebe 10' ist ferner die Vorgelegewelle 40', wie bei einem klassischen Handschaltgetriebe, immer mit der Eingangswelle 20' in Verbindung, und zwar über den Konstanten-Radsatz 42'. Im vorliegenden Fall ist allerdings die Eingangswelle 20' generell direkt mit der Abtriebswelle des Antriebsmotors 18' verbunden.

Die generelle Funktionsweise des Wechselgetriebes 10' entspricht jener des Wechselgetriebes 10 der Figur 1. Im Folgenden werden lediglich einige unterschiedliche Betriebsweisen erläutert.

Zum Einen erfolgt das Anfahren bei dem Wechselgetriebe 10' über den Hilfs-Getriebezweig 26'. In der Stellung "N", die in Figur 2 gezeigt ist, ist lediglich die Schaltkupplung des zweiten Synchronisierungs-Radsatzes 66' geschlossen. In der Stellung "D" wird auch die Anfahr-Schaltkupplung 70' geschlossen. Der Anfahrvorgang erfolgt dann durch allmähliches Schließen der Reibkupplung 30'. Hierbei wird Leistung über die Reibkupplung 30', den Anfahr-Radsatz 83, die Hilfs-Vorgelegewelle 60' und den zweiten Synchronisierungs-Radsatz 66' auf die Ausgangswelle 22' gegeben.

Sobald die richtige Übersetzung des Radsatzes 54'-1 der ersten Gangstufe erreicht ist, wird die Schaltkupplung 56' geschlossen. Die Reibkupplung 30' wird anschließend geöffnet. Da der Anfahrvorgang abgeschlossen ist, wird die Anfahr-Schaltkupplung 70' ebenfalls geöffnet und zur Vorbereitung für weitere Gangwechsel wird die Hilfs-Schaltkupplung 82 geschlossen. Dieser Zustand entspricht im Wesentlichen dem Zustand des Wechselgetriebes 10 der Figur 1 in der ersten Gangstufe. Die folgenden Gangstufenwechsel erfolgen entsprechend wie bei dem Wechselgetriebe 10 der Figur 1.

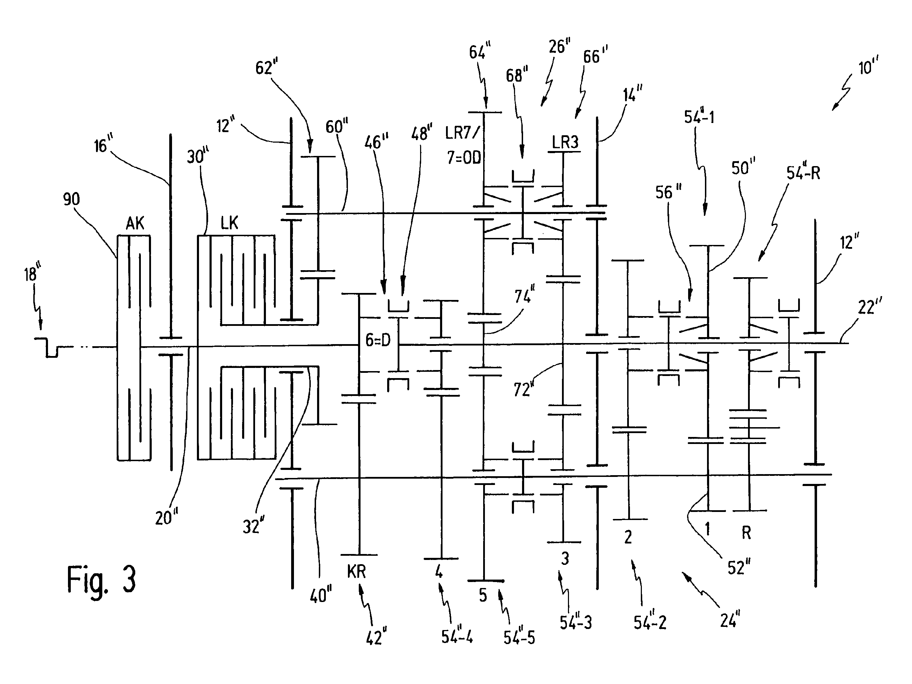

In Figur 3 ist eine dritte Ausführungsform des erfindungsgemäßen Wechselgetriebes generell mit 10" bezeichnet.

Der generelle Aufbau und die generelle Funktionsweise entsprechen weitgehend dem Wechselgetriebe 10 der Figur 1. Im Folgenden wird daher lediglich auf Unterschiede eingegangen. Soweit nichts anderes erwähnt ist, soll die Beschreibung des Wechselgetriebes 10 der Figur 1 auch auf das Wechselgetriebe 10' der Figur 3 zutreffen.

Das Wechselgetriebe 10" weist im Gegensatz zu dem Wechselgetriebe 10' eine separate Anfahr- und Trennkupplung 90 auf.

Die Anfahr- und Trennkupplung 90 ist außerhalb des Kupplungsgehäuses 16" angeordnet. Die Anfahr- und Trennkupplung 90 (AK) ist bei dem Wechselgetriebe 10" ausschließlich zum Anfahren vorgesehen. Im gesamten weiteren Betrieb bleibt die Anfahr- und Trennkupplung 90 geschlossen, insbesondere auch während Gangstufenwechseln.

Ein Eingangsglied der Anfahr- und Trennkupplung 90 ist mit der Abtriebswelle des Antriebsmotors 18" verbunden. Ein Ausgangsglied der Anfahr- und Trennkupplung 90 ist mit der Eingangswelle 20'' verbunden.

Das Wechselgetriebe 10" weist keine Anfahr-Schaltkupplung auf (wie die Schaltkupplungen 70, 70' der Wechselgetriebe 10, 10'). Die Eingangswelle 20'' ist über eine Direkt-Schaltkupplung 46" mit der Ausgangswelle 22" verbindbar. Die Direkt-Schaltkupplung 46" ist in ein erstes Schaltkupplungspaket 48" integriert, das eine weitere Schaltkupplung für einen benachbarten Radsatz 54"-4 für die vierte Gangstufe aufweist.

In axialer Richtung vor dem Lagerschild 14" sind ferner die Radsätze 54"-5 und 54''-3 für die fünfte bzw. die dritte Gangstufe angeordnet. Deren Festräder 74'' bzw. 72" sind ebenfalls Bestandteil des ersten Synchronisierungs-Radsatzes 64" bzw. des zweiten Synchronisierungs-Radsatzes 66".

In axialer Richtung hinter dem Lagerschild 14" sind die Radsätze 54"-2 und 54"-1 für die zweite bzw. die erste Gangstufe angeordnet. Dahinter ist ferner der Radsatz 54''-R für den Rückwärtsgang angeordnet.

Die Radsätze 54"-5 und 54"-3 weisen jeweils Losräder auf, die an der Vorgelegewelle 40" gelagert sind. Ein entsprechendes Schaltkupplungspaket ist dazwischen an der Vorgelegewelle 40" gelagert.

Die Radsätze 54"-2 und 54"-1 weisen jeweils Losräder auf, die an der Ausgangswelle 22" gelagert sind. Ein entsprechendes Schaltkupplungspaket ist ebenfalls an der Ausgangswelle 22" gelagert. Gleichfalls ist ein Losrad des Radsatzes 54"-R an der Ausgangswelle 22" drehbar gelagert. Auch eine Schaltkupplung zum Ein- und Auslegen des Rückwärtsganges ist an der Ausgangswelle 22" gelagert.

Bei dem Wechselgetriebe 10' sind die Schaltkupplungen für die Synchronisierungs-Radsätze 64", 66" sowie für die Radsätze 54"-1 und 54"-R für die erste Gangstufe bzw. den Rückwärtsgang jeweils mit eigenen Synchronisierungseinrichtungen ausgestattet, wie es durch schematisch angedeutete Synchronisierungskegel in Figur 3 angedeutet ist.

Alle übrigen Schaltkupplungen sind hingegen als nicht-synchronisierte Schaltkupplungen (z.B. in Form von Klauenkupplungen) ausgelegt.

Die Funktionsweise des Wechselgetriebes 10" entspricht in vieler Hinsicht jener des Wechselgetriebes 10 der Figur 1. Im Folgenden wird auf einige unterschiedliche Betriebsweisen eingegangen.

In der in Figur 3 gezeigten Darstellung befindet sich das Wechselgetriebe 10" im Zustand "N". Keine Schaltkupplung und keine Reibkupplung ist geschlossen.

In der Stellung "D" wird die Schaltkupplung 56'' für die erste Gangstufe eins geschlossen.

Zum Anfahren wird die Anfahr- und Trennkupplung 90 allmählich geschlossen. Der Leistungsfluss erfolgt dann über die Eingangswelle 20", den Konstanten-Radsatz 42", die Vorgelegewelle 40" und den Radsatz 54"-1 für die erste Gangstufe.

Wenn die Anfahr- und Trennkupplung 90 vollständig geschlossen ist, wird vorbereitend für weitere Gangwechsel die Schaltkupplung für den zweiten Synchronisierungs-Radsatz 66" geschlossen.

In der ersten Gangstufe bleibt die Anfahr- und Trennkupplung 90 in der Folge komplett geschlossen. Bei der Anfahr- und Trennkupplung 90 kann es sich um eine herkömmliche Trocken-Reibkupplung handeln. Da in Anfahr- und Trennkupplung 90 für alle weiteren Gangstufen und Gangwechsel geschlossen im Reibschluss verbleibt, kann vereinfacht davon ausgegangen werden, dass die Abtriebswelle des Antriebsmotors 18 " unmittelbar mit der Eingangswelle 20" verbunden ist, wie bei den Wechselgetrieben 10, 10' der Figuren 1 und 2.

Demzufolge erfolgt der Gangstufenwechsel in die zweite Gangstufe wie bei dem Wechselgetriebe 10 der Figur 1. Die Reibkupplung 30" wird allmählich geschlossen und übernimmt an dem Hilfs-Getriebezweig 26'' das anstehende Drehmoment. Die Schaltkupplung 56" wird geöffnet. Anschließend wird über die Reibkupplung 30" zentral synchronisiert, bis die Schaltkupplung für den Radsatz 54"-2 eingelegt werden kann. Anschließend wird die Reibkupplung 30" wieder geöffnet.

Die Gangstufenwechsel 2-3 und 3-4 erfolgen in entsprechender Weise. In der vierten Gangstufe wird, wie bei dem Wechselgetriebe 10 der Figur 1, die Schaltkupplung für den zweiten Synchronisierungs-Radsatz 66 geöffnet und die Schaltkupplung für den ersten Synchronisierungs-Radsatz 64 geschlossen.

Bei allen weiteren Gangwechseln 4-5, 5-6 und 6-7 ist die Funktionsweise des Wechselgetriebes 10" identisch zu jener des Wechselgetriebes 10 der Figur 1. Insbesondere verbleibt in der Gangstufe 7 die Reibkupplung 30' ' im Reibschluss und die eingangsseitige Leistung wird ausschließlich über den Hilfs-Getriebezweig 26" geführt.

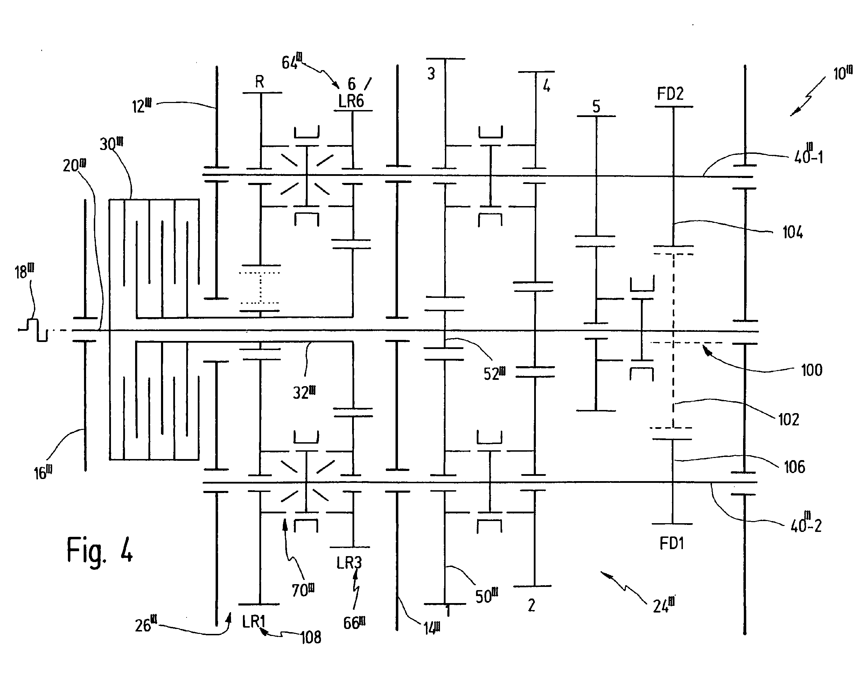

In Figur 4 ist eine vierte Ausführungsform des erfindungsgemäßen Wechselgetriebes generell mit 10 "' bezeichnet.

Das Wechselgetriebe 10''' hat generell eine vergleichbare Funktionsweise wie das Wechselgetriebe 10 in der Figur 1. Im Folgenden wird daher lediglich auf Unterschiede zwischen diesen Wechselgetrieben eingegangen. Sofern nichts anderes ausgeführt ist, soll die obige Beschreibung des Wechselgetriebes 10 gleichfalls für das Wechselgetriebe 10 "' gelten. Demzufolge sind Elemente mit gleicher oder entsprechender Anordnung und/oder Funktion in Figur 4 mit den entsprechenden Bezugsziffern des Wechselgetriebes 10 versehen, jeweils mit drei nachgestellten Hochstrichen.

Das Wechselgetriebe 10''' ist im Gegensatz zu den Wechselgetrieben der Figuren 1 - 3 für den Front-Quereinbau in einem Kraftfahrzeug ausgelegt.

Eine Eingangswelle 20"' des Wechselgetriebes 10"' erstreckt sich über dessen gesamte axiale Länge. Eine Hohlwelle 32"', die mit einem Ausgangsglied der Reibkupplung 30"' verbunden ist, erstreckt sich axial bis vor ein Lagerschild 14 " '.

Das Wechselgetriebe 10"' weist zwei Vorgelegewellen 40"'-1 bzw. 40"'-2 auf, die jeweils parallel zu der Eingangswelle 20"' ausgerichtet sind.

Der Haupt-Getriebezweig 24"' ist im Wesentlichen hinter dem Lagerschild 14'" angeordnet.

In axialer Richtung sind hinter dem Lagerschild 14"' an der ersten Vorgelegewelle 40"'-1 ein Radsatz für den dritten, den vierten und den fünften Gang angeordnet. In entsprechender Weise sind an der zweiten Vorgelegewelle 40"'-2 hinter dem Lagerschild 14"' ein Radsatz für den ersten Gang und den zweiten Gang angeordnet. Die Losräder der Radsätze für die Gänge 1-4 sind an den jeweiligen Vorgelegewellen 40"'-1 bzw. 40"'-2 angeordnet. Die Radsätze für den ersten und den dritten Gang sind axial miteinander ausgerichtet und teilen sich ein Festrad 52"', das an der Eingangswelle 20"' festgelegt ist. In entsprechender Weise teilen sich die Radsätze für die zweite und die vierte Gangstufe ein weiteres Festrad.

Schaltkupplungspakete zum Ein- und Auslegen der dritten und vierten Gangstufe bzw. der ersten und zweiten Gangstufe sind ebenfalls an den Vorgelegewellen 40"'-1 bzw. 40"'-2 angeordnet.

Eine Schaltkupplung zum Ein- und Auslegen der fünften Gangstufe ist an der Eingangswelle angeordnet. Das Losrad des Radsatzes für die fünfte Gangstufe ist demzufolge an der Eingangswelle 20"' angeordnet.

Die zwei Vorgelegewellen 40'''-1 und 40"'-2 sind mit einer gemeinsamen Abtriebseinheit 100 verbunden. Zu diesem Zweck weist die Vorgelegewelle 40"'-1 ein Abtriebsrad in Form eines Festrades 104 auf, das mit einem Abtriebseinheitsrad 102 in Eingriff steht. In entsprechender Weise weist die zweite Vorgelegewelle 40"'-2 ein Abtriebsrad in Form eines Festrades 106 auf. Das Festrad 106 kämmt ebenfalls mit dem Abtriebseinheitsrad 102.

Die Festräder 104, 106 sind am axialen Ende des Wechselgetriebes 10"' angeordnet.

Der bislang beschriebene Aufbau des Haupt-Getriebezweiges 24"' entspricht im Wesentlichen dem typischen Aufbau von handgeschalteten Wechselgetrieben für den Front-Quereinbau, in der sogenannten Drei-Wellenbauweise.

Im Unterschied zu dieser sind die einzelnen Schaltkupplungen des Haupt-Getriebezweiges jedoch als nicht-synchronisierte, formschlüssig wirkende Schaltkupplungen ausgebildet, bspw. als Klauenkupplungen.

Der Hilfs-Getriebezweig 26"' weist einen Anfahrradsatz 108 auf. Ferner weist der Hilfs-Getriebezweig 26"' einen Rückwärtsgangstufen-Radsatz auf. Der Rückwärtsgang-Radsatz und der Radsatz 108 sind axial miteinander ausgerichtet und teilen sich ein Festrad, das an der Hohlwelle 32"' festgelegt ist.

Das Losrad des Anfahrradsatzes 108 ist an der zweiten Vorgelegewelle 40"'-2 angeordnet und wird mittels einer synchronisierten Schaltkupplung (Anfahrschaltkupplung 70"') betätigt. In entsprechender Weise ist eine synchronisierte Schaltkupplung für ein Losrad des Rückwärtsgangstufen-Radsatzes an der ersten Vorgelegewelle 40 " '-1 vorgesehen.

An der ersten Vorgelegewelle 40 "'-1 ist ferner ein Losrad eines ersten Synchronisierungs-Radsatzes 64 "' angeordnet. Das Losrad ist mittels einer weiteren synchronisierten Schaltkupplung mit der Vorgelegewelle 40 "'-1 verbindbar. Diese Schaltkupplung sowie die Schaltkupplung für die Rückwärtsgangstufe sind in einem Schaltkupplungspaket vereinigt, das an der ersten Vorgelegewelle 40"'-1 angeordnet ist.

In entsprechender Weise ist an der zweiten Vorgelegewelle 40"'-2 ein Losrad eines zweiten Synchronisierungs-Radsatzes 66"' gelagert. Das Losrad ist mittels einer weiteren synchronisierten Schaltkupplung mit der zweiten Vorgelegewelle 40"'-2 verbindbar. Diese Schaltkupplung sowie die Schaltkupplung 70"' sind in einem weiteren Schaltkupplungspaket vereinigt.

Ferner teilen sich die Synchronisierungs-Radsätze 64"', 66"' ein Festrad, das an der Hohlwelle 32"' festgelegt ist.

Der Anfahrradsatz 108 weist eine identische Übersetzung auf wie der Radsatz für die erste Gangstufe des Haupt-Getriebezweiges 24"'. Zum Anfahren dient die Reibkupplung 30'''. Hierbei wird zunächst die Anfahrschaltkupplung 70"' betätigt. Anschließend erfolgt das Anfahren über die Reibkupplung 30"'. Sobald die Reibkupplung 30"' vollständig geschlossen ist, wird die Schaltkupplung des Losrades 50"' des Haupt-Getriebezweiges 24"' eingelegt und die Anfahrschaltkupplung 70"' wird geöffnet. Gleichfalls wird die Reibkupplung 30"' geöffnet. Die folgenden Gangwechsel erfolgen in entsprechender Weise zu der Funktionsweise des Wechselgetriebes 10 der Figur 1.

Der erste Synchronisierungs-Radsatz 64"' ist bei dem Wechselgetriebe 10"' als Gangstufen-Radsatz für die sechste Gangstufe ausgelegt. Bei eingelegtem sechsten Gang befindet sich die Reibkupplung 30"' folglich im Reibschluss (wie bei den entsprechenden Radsätzen für den siebten Gang bei den Wechselgetrieben der Figuren 1 - 3).

Das Wechselgetriebe 10"' ist daher im Gegensatz zu den Wechselgetrieben der Figuren 1 - 3 lediglich ein Sechs-Ganggetriebe.

Das Anfahren im Rückwärtsgang erfolgt ebenfalls über die Reibkupplung 30'''. Ein separater Radsatz für den Rückwärtsgang ist innerhalb des Haupt-Getriebezweiges nicht vorgesehen. Mit anderen Worten wird im Rückwärtsgang ausschließlich über die Reibkupplung 30"' und den Hilfs-Getriebezweig 26"' gefahren.

Bei dem Wechselgetriebe 10"' sind die Radsätze für den Haupt-Getriebezweig 24"' und den Hilfs-Getriebezweig 26"' auf die zwei Vorgelegewellen 40'''-1 und 40"'-2 verteilt. Mit anderen Worten finden sich bspw. an der ersten Vorgelegewelle 40 " '-1 sowohl Radsätze des Haupt- als auch solche des Hilfs-Getriebezweiges 24"' bzw. 26"'.

## Patentansprüche

1. Zentral synchronisiertes automatisches Wechselgetriebe (10) zum Einrichten einer Mehrzahl von Gangstufen (1-7,R), insbesondere für Kraftfahrzeuge, mit einer Eingangswelle (20), einem Haupt-Getriebezweig (24), einem hierzu parallelen Hilfs-Getriebezweig (26) und einer Ausgangswelle (22), wobei der Haupt-Getriebezweig (24) eine Mehrzahl von Gangstufen-Radsätzen (54) zur Einrichtung unterschiedlicher Gangstufen aufweist, wobei der Hilfs-Getriebezweig (26) wenigstens einen Synchronisierungs-Radsatz (64, 66) zur zentralen Synchronisierung aufweist, wobei die Radsätze des Haupt-Getriebezweiges (24) und des Hilfs-Getriebezweiges (26) jeweils ein Losrad (50) und ein damit kämmendes Festrad (52) aufweisen und mit der Ausgangswelle (22) verbunden sind, wobei der Haupt-Getriebezweig (24) unmittelbar oder über eine Haupt-Schaltkupplung (44) mit der Eingangswelle (20) verbunden ist und wobei der Hilfs-Getriebezweig (26) über eine Reibkupplung (30) mit der Eingangswelle (20) verbunden ist, die zum zentralen Synchronisieren bei Wechseln von Gangstufen des Haupt-Getriebezweiges eingerichtet ist.

2. Wechselgetriebe nach Anspruch 1, wobei der Haupt-Getriebezweig (24) und der Hilfs-Getriebezweig (26) jeweils eine Vorgelegewelle (40 bzw. 60) aufweisen, die parallel zu der Ausgangswelle (22) angeordnet sind.

3. Wechselgetriebe nach Anspruch 1 oder 2, wobei ein Synchronisierungs-Radsatz (64) des Hilfs-Getriebezweiges (26) eine kleinere Übersetzung aufweist als Radsätze des Haupt-Getriebezweiges (24).

4. Wechselgetriebe nach einem der Ansprüche 1 bis 3, wobei ein Radsatz (64) des Hilfs-Getriebezweiges (26) eine Übersetzung kleiner als eins (Overdrive) aufweist.

5. Wechselgetriebe nach einem der Ansprüche 1 bis 4, wobei der Hilfs-Getriebezweig (26) wenigstens einen weiteren Synchronisierungs-Radsatz (66) mit einer anderen Übersetzung aufweist, wobei die zwei Synchronisierungs-Radsätze (64, 66) bei Gangstufenwechseln des Haupt-Getriebezweiges (24) zur zentralen Synchronisierung verwendbar sind.

6. Wechselgetriebe nach einem der Ansprüche 1 bis 5, wobei ein Synchronisierungs-Radsatz (64) als Gangstufen-Radsatz zur Einrichtung einer Gangstufe (7) des Wechselgetriebes (10) ausgebildet ist.

7. Wechselgetriebe nach einem der Ansprüche 1 bis 6, wobei die Eingangswelle (20) und die Ausgangswelle (22) koaxial zueinander ausgerichtet sind.

8. Wechselgetriebe nach Anspruch 7, wobei eine direkte Gangstufe (6) (mit einer Übersetzung von eins) durch eine Direkt-Schaltkupplung (46) einrichtbar ist, die die Eingangswelle (20) und die Ausgangswelle (22) miteinander verbinden kann.

9. Wechselgetriebe nach Anspruch 8, wobei die Haupt-Schaltkupplung (44) und die Direkt-Schaltkupplung (46) als erstes Schaltkupplungspaket (48) ausgebildet sind, das die Eingangswelle (20) mit der Ausgangswelle (22) oder mit einem Radsatz (42; 54'; 92) verbinden kann, der die Eingangswelle (20) mit einer Vorgelegewelle (40) des Haupt-Getriebezweiges (24) verbindet.

10. Wechselgetriebe nach einem der Ansprüche 1 bis 9, wobei der Haupt-Getriebezweig (24) und der Hilfs-Getriebezweig (26) in einem Getriebegehäuse (12) aufgenommen sind und wobei die Reibkupplung (30) außerhalb des Getriebegehäuses (12) gelagert ist.

11. Wechselgetriebe nach Anspruch 10, wobei der Hilfs-Getriebezweig (26) mit der Reibkupplung (30) über eine Hohlwelle (32) verbunden ist, die die Eingangswelle (20) umgibt.

12. Wechselgetriebe nach einem der Ansprüche 1 bis 11, wobei ein Ausgangsglied der Reibkupplung (30) bzw. eine damit verbundene Welle (32) über mindestens einen Radsatz (62; 62', 83) mit einer Vorgelegewelle (60) des Hilfs-Getriebezweiges (26) verbunden oder verbindbar ist.

13. Wechselgetriebe nach Anspruch 12, wobei das Ausgangsglied der Reibkupplung (30) bzw. die damit verbundene Welle (32) über zwei Radsätze (62', 83) mit der Vorgelegewelle (60) des Hilfs-Getriebezweiges (26) verbindbar ist, wobei die zwei Radsätze (62', 83) mittels eines dritten Schaltkupplungspaketes (80) wahlweise zum Zwecke der Verbindung verwendbar sind.

14. Wechselgetriebe nach einem der Ansprüche 1 bis 13, wobei die Reibkupplung (30; 30') als Anfahrkupplung ausgelegt ist und die Eingangswelle (20) unmittelbar mit einem Antriebsmotor (18) verbindbar ist.

15. Wechselgetriebe nach Anspruch 14, wobei die Reibkupplung (30) über eine Anfahr-Schaltkupplung (70) mit dem Haupt-Getriebezweig (24) verbindbar ist, um einen Anfahrvorgang über einen Radsatz (54) des Haupt-Getriebezweiges (24) durchführen zu können.

16. Wechselgetriebe nach Anspruch 14, wobei die Reibkupplung (30') über eine Anfahr-Schaltkupplung (70') mit dem Hilfs-Getriebezweig (26') verbindbar ist, um einen Anfahrvorgang über einen Radsatz (66) des Hilfs-Getriebezweiges (26) durchführen zu können.

17. Wechselgetriebe nach einem der Ansprüche 1 bis 13, wobei die Eingangswelle (20) über eine Anfahr- und Trennkupplung (90) mit einem Antriebsmotor (18) verbindbar ist.

18. Wechselgetriebe nach Anspruch 1, wobei das Wechselgetriebe (10''') zwei Vorgelegewellen (40 "'-1, 40"'-2) aufweist, die parallel zur Eingangswelle (20"') ausgerichtet sind, und wobei mit den Vorgelegewellen jeweils verbundene Festräder (104, 106) mit einer Abtriebseinheit (100) verbunden sind.

19. Wechselgetriebe nach Anspruch 18, wobei die Abtriebseinheit (100) ein Vorderachsegetriebe aufweist.

20. Wechselgetriebe nach Anspruch 18 oder 19, wobei die Radsätze des Haupt-Getriebezweiges (24"') und des Hilfs-Getriebezweiges (26"') auf die zwei Vorgelegewellen (40"'-1, 40"'-2) verteilt sind.
